# EUROPÄISCHE PATENTSCHRIFT

(11) **EP 3 612 401 B1**
(45) Veröffentlichungstag und Bekanntmachung des Hinweises auf die Patenterteilung: **07.04.2021**
(21) Anmeldenummer: 18704912.7
(22) Anmeldetag: 01.02.2018
(51) Int. Cl.: B60C 11/12, B60C 11/03

(54) **FAHRZEUGLUFTREIFEN MIT EINEM FEINEINSCHNITT IN EINEM PROFILBLOCKELEMENT**
VEHICLE TYRES HAVING A SIPE IN A PROFILE BLOCK ELEMENT
PNEUMATIQUE DE VÉHICULE AUTOMOBILE MUNI D'UNE ENTAILLE FINE DANS UN ÉLÉMENT DE BLOC DE PROFILÉ

(30) Priorität: 21.04.2017 DE 102017206731
(43) Veröffentlichungstag der Anmeldung: 26.02.2020
(73) Patentinhaber: Continental Reifen Deutschland GmbH, 30165 Hannover (DE)
(72) Erfinder: JACOB, Matthias, 04103 Leipzig (DE)
(74) Vertreter: Continental Corporation
(86) Internationale Anmeldenummer: PCT/EP2018/052460
(87) Internationale Veröffentlichungsnummer: WO 2018/192694

(56) Entgegenhaltungen:
- EP-A1- 1 787 826
- WO-A1-2010/144091
- JP-A- H11 123 910
- KR-B1- 101 038 020

## Beschreibung

Die Erfindung betrifft einen Fahrzeugluftreifen mit einem eine Kontaktfläche umfassenden Laufstreifen, wobei der Laufstreifen ausgehend von einem Reifenzenit zu Reifenschultern hin Reihen von Schulterprofilblockelementen aufweist, wobei die Reihen von Schulterprofilblockelementen durch in Umfangsrichtung umlaufende Umfangsrillen von einem zentralen Laufstreifenbereich mit einer oder mehreren Reihen von Zentralprofilblockelementen getrennt sind, wobei in den Reihen von Schulterprofilblockelementen einzelne Schulterprofilblockelemente durch Querrillen voneinander getrennt sind und wobei in der oder in den Reihen von Zentralprofilblockelementen einzelne Zentralprofilblockelemente durch Querrillen voneinander getrennt sind, wobei mindestens ein Profilblockelement aus der Gesamtheit der Schulterprofilblockelemente und der Zentralprofilblockelemente mindestens einen Feineinschnitt aufweist, wobei der Feineinschnitt eine parallel zur Kontaktfläche verlaufenden Gesamterstreckungslänge L_{GES} aufweist.

Feineinschnitte in Profilblockelementen eines Laufstreifens eines Fahrzeugluftreifens sind in verschiedenen Ausführungen bereits im Stand der Technik bekannt. Eine besondere Form der Feineinschnitte sind dabei die so genannten 3-D-Feineinschnitte (dreidimensionale Feineinschnitte), welche aufgrund ihrer dreidimensionalen Ausformungen verschiedene Aufgaben erfüllen können. Zu diesen Aufgaben gehören zum Beispiel die Optimierung der Steifigkeit der Profilblöcke und die Optimierung des Trockenfahrverhaltens, insbesondere in Kurven.

Des Weiteren haben Feineinschnitte jedoch auch die Aufgabe, die Anzahl von Kanten im Laufstreifen des Fahrzeugluftreifens zu erhöhen, sodass ein besseres Haftvermögen des Fahrzeugluftreifens auf glatten Fahrbahnen erreicht wird, wie zum Beispiel nassen oder schneebedeckten Straßen. Die Erhöhung der Anzahl der Feineinschnitte hat jedoch zur direkten Folge, dass die Steifigkeit der Profilblöcke abnimmt.
Eine weitere Anforderung an die Feineinschnitte ist, dass sich die Geometrie der Feineinschnittsöffhung, welche durch das in der Kontaktfläche mündende Ende des Feineinschnitts gebildet wird, während der Lebensdauer des Fahrzeugluftreifens möglichst wenige verändert.
Die vorstehend beschriebenen Effekte müssen daher bei der Konstruktion neuer Laufstreifen mit dreidimensionalen Feineinschnitten berücksichtigt werden, um ein optimiertes Fahrverhalten zu erreichen.
Im Stand der Technik sind verschiedene Feineinschnitte in Laufstreifen von Fahrzeugluftstreifen bekannt:
DE 102010 000 272 A1 offenbart einen "Fahrzeugluftreifen, insbesondere für den Einsatz unter winterlichen Fahrbedingungen, mit einem Laufstreifen mit durch in Umfangsrichtung laufenden Nuten [...]" (vgl. Anspruch 1).

Eine Aufgabe, die der Erfindung zugrunde liegt, besteht darin, einen Fahrzeugluftreifen bereitzustellen, der ein besseres Fahrverhalten auf trockenem und/oder auf nicht trockenem Untergrund aufweist. Nicht trockene Untergründe sind dabei z.B. verschneite oder nasse Fahrbahnen. Dabei verändert sich die Geometrie der Feineinschnittsöffhung bevorzugt nicht während der Lebensdauer des Fahrzeugluftreifens.

Gelöst wird diese Aufgabe erfindungsgemäß in Bezug auf einen Fahrzeugluftreifen mit den Merkmalen des Anspruchs 1.

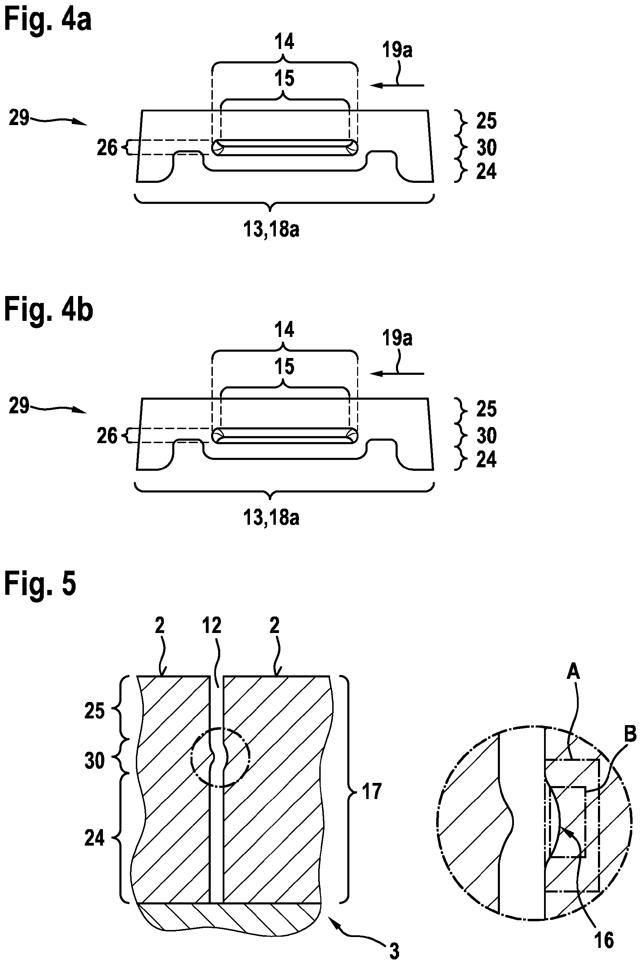

EP 1 787826 B1 offenbart einen "Luftreifen (10), in welchem zumindest drei Felder von Landabschnitten in einem Laufstreifen (17) einer Lauffläche (16) definiert sind entlang einer Umfangsrichtung des Reifens durch Hauptnuten (20, 22), die kontinuierlich in der Umfangsrichtung des Reifens gebildet sind, wobei: 3D Sicken (42L, 42R) in Landabschnitten (54L, 54R) gebildet sind, die an beiden Laufstreifenendseiten in einer Breitenrichtung des Reifens bereitgestellt sind; und 1D Sicken oder 2D Sicken (36L, 23L, 23R, 36R), oder alternativ Sicken, die eine Kombination von 1D und 2D Sicken umfassen, die in Landabschnitten (26L, 24, 26R) gebildet sind, die an einer Reifenäquatorialseite in Bezug auf die Landabschnitte bereitgestellt sind, die an beiden Laufstreifenendseiten bereitgestellt sind, wobei die 1D Sicken und die 2D Sicken gebildet sind, um sich in einer diagonalen Richtung in Bezug auf eine Reifenbreitenrichtung zu erstrecken" (s. Anspruch 1).
WO 2010/144091 A1 offenbart ein "Sipe-Formelement zur Verwendung in einer Form, umfassend: ein oberes Formelement, das sich von einem oberen Ende nach unten zu einem unteren Ende mit einer dazwischen liegenden Welligkeit nach unten erstreckt; und ein erstes unteres Projektionselement und ein zweites unteres Projektionselement, wobei sich jedes untere Element vom oberen Formelement nach unten erstreckt und eine nach außen gerichtete Oberfläche und eine nach innen gerichtete Oberfläche aufweist" (vgl. Anspruch 1). JP H11 123910 A offenbart ein "in einem Block 18 vorgesehener seitlicher Einschnitt 20, welcher in einen seitlichen Streifen 20a unterteilt, der von der Hälfte des Blocks 18 zur Seite der Endfläche 18a des Blocks in Richtung Breite (w) angeordnet ist, und einen seitlichen Streifen 20b, der von der Hälfte des Blocks zur Seite der Endfläche 18b des Blocks angeordnet ist. Da die Unregelmäßigkeiten der jeweiligen wellenförmigen Teile 24, 26 der Seitenprofile 20a und 20b in umlaufender Richtung (p) gegensätzlich geformt sind, werden bei Berührung des Blocks 18 die Endteile der wellenförmigen Teile 24, 26 auf dem Boden gedreht, sodass die Steifigkeit des Blocks 18 unabhängig voneinander erhöht werden kann die Drehrichtung" (vgl. Abstract).
KR 101 038020 B1 offenbart eine "Gewindekabelstruktur eines Schwerlastreifens bestehend aus einem Block, einem Kerf(2) und einem Strömungsweg(3). Der Kerf wird auf dem Block installiert, um die Bremswirkung auf Eis und nasser Straße zu verstärken. Der untere Teil des Kerns hat eine breitere Fläche als ein Einlass(2a) des Kerns. Ein rechtwinkliges Wellenform-Kontaktloch(2b) wird zwischen dem unteren Teil des Kerns und dem horizontalen Wellenformeinlass des Kerns gebildet. Der Strömungsweg wird am unteren Teil des Kerns gebildet. Der Strömungsweg besteht aus einem Blade-Gummi(4)" (vgl. Abstract). Bevorzugt umfasst ein erfindungsgemäßer Fahrzeugluftreifen zwei oder drei Reihen von Zentralprofilblockelementen, welche durch eine weitere bzw. durch zwei weitere Umfangsrillen voneinander getrennt werden. Bevorzugt umfasst ein erfindungsgemäßer Fahrzeugluftreifen nur eine Reihe an Schulterprofilblockelementen je Reifenschulter und somit insgesamt zwei Reihen an Schulterprofilblockelementen.
Der rinnenförmige Bereich kann dabei in Form einer offenen oder einer geschlossenen Sicke vorliegen und unterteilt den Feineinschnitt in einen ersten, oberen Abschnitt und in einen zweiten, unteren Abschnitt. Der dritte, mittlere Abschnitt umfasst dabei den rinnenförmigen Bereich.
Im Rahmen der vorliegenden Erfindung entspricht die Rinnenlänge L_{R} des rinnenförmigen Bereiches in Form einer Sicke bevorzugt der Länge des Obergurtes einer entsprechenden Sicke. Der Obergurt einer Sicke wird umgangssprachlich auch Hochsicke genannt. Der Obergurt ist bevorzugt der Abschnitt des rinnenförmigen Bereiches, welcher in Figur 5 vom Rechteck B umschlossen wird. Bei einer offenen Sicke entspricht die Rinnenlänge L_{R} des rinnenförmigen Bereiches der Gesamterstreckungslänge L_{GES} des Feineinschnitts.
Im Rahmen der vorliegenden Erfindung weisen mindestens 10 %, bevorzugt mindestens 20 %, besonders bevorzugt mindestens 30 %, ganz besonders bevorzugt mindestens 50 %, insbesondere ganz besonders bevorzugt mindestens 70 %, in besonders hohem Maße ganz besonders bevorzugt mindestens 90 % der einzelnen Profilblockelemente der Gesamtheit der Schulterprofilblockelemente und der Zentralprofilblockelemente mindestens einen vorstehend beschriebenen Feineinschnitt auf. Jedes einzelne Profilblockelement der Profilblockelemente, welche mindestens einen vorstehend beschriebenen Feineinschnitt aufweisen, weist bevorzugt jeweils eine Anzahl von 1 bis 10 Feineinschnitten auf, bevorzugt 2 bis 6 Feineinschnitte.

Die vorstehend beschriebene Ausformung eines Feineinschnitte in einem erfindungsgemäßen Fahrzeugluftreifen hat einerseits den Vorteil, dass durch den rinnenförmigen Bereich die beiden gegenüberliegenden Wände des Feineinschnitts entlang den rinnenförmigen Bereich sich besser ineinander verscheren können und somit einen effektiveren Formschluss miteinander aufweisen. Der effektivere Formschluss bewirkt eine Erhöhung der Steifigkeit des Profilblockelements mit dem betreffenden Feineinschnitt. Das Vorhandensein eines rinnenförmigen Bereichs in einem Feineinschnitt in einem erfindungsgemäßen Fahrzeugluftreifen hat auch den Vorteil, dass durch den rinnenförmigen Bereich in Form einer Sicke die von dem Feineinschnitt gebildeten Wände zusätzlich versteift werden. Diese zusätzliche Steifigkeit bewirkt ein verbessertes Fahrverhalten auf trockenem Untergrund.
Außerdem bewirken die Kanten auf der Kontaktfläche, welche durch die Feineinschnitte geschaffen werden, ein verbessertes Fahrverhalten auf nassem oder verschneitem Untergrund.
Das Vorhandensein eines rinnenförmigen Bereiches wie vorstehend beschrieben verbessert daher insbesondere die Steifigkeit von Profilblockelementen auf Laufstreifen, welche besonders viele Feineinschnitte aufweisen, wie dies zum Beispiel bei Winter- oder All-Season-Fahrzeugluftreifen der Fall ist, ganz besonders bei All-Season-Fahrzeugluftreifen, insbesondere ganz besonders bei All-Season-Fahrzeugluftreifen für PKWs.

Zusätzlich zu den vorstehend beschriebenen Vorteilen ist es insbesondere vorteilhaft, wenn der rinnenförmige Bereich die Form einer offenen Sicke aufweist. In diesem Fall ändert sich die Geometrie der Feineinschnittsöffnung in der Kontaktfläche auch dann nicht, wenn das Profilblockelements mit dem Feineinschnitts bereits derart weit durch Abrieb verkleinert wurde, dass die Kontaktfläche des Profilblockelements sich bereits auf Höhe des dritten, mittleren Abschnitts befindet. Somit bleiben die Anzahl und die Orientierung der Kanten pro Profilblockelements ungefähr konstant, auch wenn schon ein beträchtlicher Teil des Profilblockelements durch Gebrauch des Fahrzeugluftreifens abgerieben wurde. Die Kanten der Feineinschnittsöffnung, welche an die Kontaktfläche angrenzen, können dabei gradlinig oder sinusförmig verlaufen. Letzteres bewirkt eine verbesserte Schneetraktion.

Im Rahmen der vorliegenden Erfindung sind Feineinschnitte schmaler als Querrillen und schmaler als Umfangsrillen. Bevorzugt sind die Querrillen dabei schmaler als die Umfangsrillen.
Feineinschnitte in Profilblockelementen in Laufstreifen für PKWs haben bevorzugt eine Breite von 0,4 bis 1,5 mm, besonders bevorzugt von 0, 4 bis 1 mm. Feineinschnitte in Profilblockelementen in Laufstreifen für Nutzfahrzeuge haben bevorzugt eine Breite von 1 mm bis 4 mm. Im Rahmen der vorliegenden Erfindung wird die Breite eines Feineinschnitte senkrecht zur Haupterstreckungsrichtung des Feineinschnitts und parallel zur Kontaktfläche des Laufstreifens gemessen.
Im Rahmen der vorliegenden Erfindung haben Querrillen bevorzugt eine Breite von 1,5 mm bis 8 mm und Umfangsrillen bevorzugt eine Breite von 4 mm bis 18 mm, wobei die Querrillen bezüglich ihrer Breite schmaler sind als die Umfangsrillen. Besonders bevorzugt ist der erfindungsgemäße Fahrzeugluftreifen ein Winter- oder All-Season-Fahrzeugluftreifen wie im Folgenden beschrieben und weist Querrillen mit einer Breite von 1,5 mm bis 8 mm und Umfangsrillen mit einer Breite von 8 mm bis 18 mm auf.

Bevorzugt ist ein vorstehend beschriebener Fahrzeugluftreifen ein Winter- oder All-Season-Fahrzeugluftreifen, besonders bevorzugt ein All-Season-Fahrzeugluftreifen, ganz besonders bevorzugt ein All-Season-Fahrzeugluftreifen für PKWs. Winter- oder All-Season-Fahrzeugluftreifen weisen eine im Vergleich zum Sommerluftreifen erhöhte Anzahl an Feineinschnitten auf, um eine bessere Griffigkeit auf nicht trockenem Untergrund zu bewirken. All-Season-Fahrzeugluftreifen müssen sowohl auf trockenem als auch auf nicht trockenem Untergrund eine ausreichend gute Griffigkeit aufweisen und werden daher auf besonders vorteilhafter Weise mit Feineinschnitten wie vorstehend oder nachstehend beschrieben ausgestattet, um die Steifigkeit der Profilblockelemente zusätzlich zu erhöhen. Dies führt zusätzlich zu einem besseren Fahrverhalten auf trockenem Untergrund.

Im Rahmen der vorliegenden Erfindung bezieht sich der Ausdruck "axial" auf die Richtung der Achse, um welche sich der Fahrzeugluftreifen dreht.

Im Rahmen der vorliegenden Erfindung bezieht sich der Ausdruck "radial" auf eine zur axialen Richtung senkrechte Richtung, die parallel zum Normalvektor der Lauffläche ist. Im Rahmen der vorliegenden Erfindung entspricht die Umfangsrichtung der Umlaufrichtung des Fahrzeugluftreifens. Im Rahmen der vorliegenden Erfindung ist die Lauffläche des Fahrzeugluftreifens die Fläche, welche parallel zur Umlaufrichtung des Fahrzeugluftreifens verläuft und auf der die Profilblockelemente auf dem Reifen stehen. Der Normalvektor der Lauffläche ist senkrecht zur Umlaufrichtung und zur Rotationsachse des Fahrzeugluftreifens. Im Rahmen der vorliegenden Erfindung ist die Kontaktfläche eines Laufstreifens die Oberfläche der Profilblockelemente des Laufstreifens, die bei einem regulären Abrollen des Fahrzeugluftreifens in unmittelbarem Kontakt mit der Fahrbahn oder allgemeiner dem Untergrund steht.

Bevorzugt ist auch ein Fahrzeugluftreifen wie vorstehend beschrieben oder wie vorstehend als bevorzugt beschrieben, wobei der Feineinschnitt räumlich getrennt von einer Block- und einer Umfangsrille ist, das heißt, dass der Feineinschnitt nicht in eine oder mehrere Umfangs- oder Querrillen mündet.

Beim Bremsen passiert es, dass die seitlichen Profilblockelementbereiche, welche keine Feineinschnitte aufweisen, aufgrund des größeren Kontakts mit der Fahrbahn eine höhere Krafteinwirkung erfahren als mittig verlaufende Profilblockelementbereiche mit Feineinschnitten. Die resultierende Verformung beeinflusst das Bremsverhalten negativ. Durch den Einsatz eines rinnenförmigen Bereichs können vorstehend beschriebene Verbiegungen der Feineinschnittswände, insbesondere entlang der axialen Richtung, reduziert oder gänzlich verhindert werden. Dieser stabilisierende Effekt ist eine direkte Wirkung, welche aus dem Einsatz eines rinnenförmigen Bereiches in Form einer Sicke in einem Feineinschnitt resultiert, und verbessert das Fahrverhalten auf trockenem Untergrund. Dies gilt insbesondere für das Fahrverhalten in Kurven auf trockenem Untergrund, wenn der räumlich abgetrennte Feineinschnitt sich im Schulterprofilblockelement befindet.

In anderen Fällen kann es jedoch vorteilhaft sein, wenn der Feineinschnitt in eine Umfangs- oder Querrille mündet. Dies hat den Vorteil, dass im Falle von Winterreifen eine noch höhere Schneetraktion erreicht werden kann, da die Profilblöcke beim Bremsen "aufklappen" können, das heißt durch die entsprechende Mündung besser im Schnee greifen können. Dies gilt insbesondere für das Fahrverhalten auf nicht trockenem Untergrund, wenn der räumlich abgetrennte Feineinschnitt sich im Zentralprofilblockelement befindet.

Bevorzugt ist auch ein Fahrzeugluftreifen wie vorstehend beschrieben oder wie vorstehend als bevorzugt beschrieben, wobei die Rinnenlänge L_{R} 40 % bis 100% der Gesamterstreckungslänge L_{GES} des Feineinschnitts entspricht, bevorzugt 80 % bis 100 % der Länge L_{GES} des Feineinschnitts.

Der vorstehend beschriebene Aspekt der vorliegenden Erfindung ist vorteilhaft, da die vorstehend beschriebene Verformung des Feineinschnitts entlang der axialen Richtung noch besser durch rinnenförmige Bereiche mit einer größeren Rinnenlänge reduziert oder gar verhindert werden kann.

Bevorzugt ist auch ein Fahrzeugluftreifen wie vorstehend beschrieben oder wie vorstehend als bevorzugt beschrieben, wobei der rinnenförmige Bereich
- eine sich radial erstreckenden Rinnenbreite B_{R} von 1,0 mm bis 5,0 mm, bevorzugt von 1,2 mm bis 3 mm, aufweist,
   und/oder
- eine sich zur Rinnenlänge und Rinnenbreite senkrecht erstreckenden Rinnenhöhe H_{R} von 0,2 mm bis 2,0 mm aufweist, bevorzugt von 0,3 mm bis 1,0 mm, besonders bevorzugt von 0,4 mm bis 0,8 mm.

Der vorstehend beschriebene Aspekt der Erfindung hat den Vorteil, dass durch die vorstehend beschriebenen Bereiche der Rinnenbreite und/oder Rinnenhöhe eine noch bessere Steifigkeit der Wände des Feineinschnitts sowie ein besserer Formschluss der Wände untereinander erzielt werden können und somit sich das Brems- und Fahrverhalten auf trockenem Untergrund noch einmal deutlich verbessert. Zudem stellen die vorstehend beschriebenen Bereiche einen optimalen Kompromiss zwischen der Entformbarkeit des Lamellenbleches nach der Vulkanisation und einem ausreichend guten Formschluss zwischen den Wänden des Feineinschnittes dar.

Im Rahmen der vorliegenden Erfindung erstreckt sich die Rinnenbreite des rinnenförmigen Bereiches des Feineinschnittes in radiale Richtung und die Rinnenhöhe senkrecht zum gradlinigen Teil der Wandfläche des Feineinschnittes.

Bevorzugt ist auch ein Fahrzeugluftreifen wie vorstehend beschrieben oder wie vorstehend als bevorzugt beschrieben, wobei der Feineinschnitt einen rinnenförmigen Bereich in Form einer Halbrund-, Kasten-, Dreiecks- oder Trapezsicke aufweist,
wobei der Feineinschnitt bevorzugt einen rinnenförmigen Bereich in Form einer Halbrundsicke aufweist, wobei ein Querschnitt, bevorzugt sämtliche Querschnitte, des rinnenförmigen Bereichs in Form einer Halbrundsicke einen Kreisbogen mit einem Radius r und mit einem Mittelpunktswinkel α
darstellt, wobei
- der Radius r im Bereich von 0,5 mm bis 2,0 mm liegt
   und/oder
- der Winkel α im Bereich von 45° bis 180° liegt, bevorzugt im Bereich von 90° bis 270°.

Denkbar sind auch geometrische Formen für den rinnenförmigen Bereich in Form einer die Sicke, wobei der Querschnitt der Sicke Formen zwischen einem Halbkreis, einem Kasten, einem Dreieck oder einem Trapez annimmt. Auch Querschnitte in Form einer Ellipse können im Rahmen der vorliegenden Erfindung einen vorteilhaften Formschluss zwischen den Feineinschnittswänden ermöglichen.

Besonders bevorzugt ist auch ein Fahrzeugluftreifen wie vorstehend für einen Feineinschnitt mit einem rinnenförmigen Bereich in Form einer Halbrundsicke beschrieben, wobei der rinnenförmige Bereich in Form einer Halbrundsicke einen Kreisbogen mit einem Radius von 0,7 mm und einem Winkel von 150° aufweist.
Im Rahmen der vorliegenden Erfindung werden die vorstehenden Parameter an einem Querschnitt der Haupterstreckung des rinnenförmigen Bereichs ermittelt, wobei der Normalvektor der Querschnittsebene parallel zur Haupterstreckungsrichtung verläuft. Bevorzugt erfüllt zumindest die obere Hälfte des rinnenförmigen Bereichs die vorstehenden Parameter, d.h. die Hälfte des Querschnitts des rinnenförmigen Bereichs, welche vollständig den Obergurt umfasst, besonders bevorzugt mindestens die oberen 50% der oberen Hälfte des rinnenförmigen Bereichs (vgl. auch Figur 5).
Der vorstehend beschriebene Aspekt der Erfindung hat den Vorteil, dass durch die vorstehend beschriebenen Bereiche der Rinnenbreite und/oder Rinnenhöhe eine noch bessere Steifigkeit der Wände des Feineinschnitts erzielt werden kann und somit sich das Brems- und Fahrverhalten auf trockenem Untergrund noch einmal deutlich verbessert. Zudem stellen die vorstehend beschriebenen Bereiche einen optimalen Kompromiss zwischen der Entformbarkeit des Lamellenbleches nach der Vulkanisation und einem ausreichend guten Formschluss zwischen den Wänden des Feineinschnittes dar.

Bevorzugt ist ein Fahrzeugluftreifen wie vorstehend beschrieben oder wie vorstehend als bevorzugt beschrieben, wobei der Feineinschnitt eine radiale Einschnittstiefe, bevorzugt eine maximale radiale Einschnittstiefe, von 50 % bis 100 % der radialen Profilblockhöhe aufweist.
Der vorstehend beschriebene Aspekt der Erfindung hat den Vorteil, dass durch die vorstehend beschriebenen Bereiche der radialen Einschnittstiefe auch nach längerem Gebrauch immer noch Feineinschnitte in den Profilblockelementen vorhanden sind und somit sich das Brems- und Fahrverhalten nach längerem Gebrauch möglichst wenig verschlechtert. Zudem stellen die vorstehend beschriebenen Bereiche einen optimalen Kompromiss zwischen der Entformbarkeit des Lamellenbleches nach der Vulkanisation und einem ausreichend guten Formschluss zwischen den Wänden des Feineinschnittes dar.

Die radiale Einschnittstiefe ist im Rahmen der vorliegenden Erfindung die Erstreckung des Feineinschnittes, welche sich von der Kontaktfläche des Profilblockelements hin zur Lauffläche des Fahrzeugluftreifens erstreckt. Die maximale radiale Einschnittstiefe ist im Rahmen der vorliegenden Erfindung die maximale Distanz von einer Kante eines Feineinschnittes an der Kontaktfläche des Profilblockelements bis hin zum gegenüberliegenden Ende des Feineinschnittes, wobei die maximale radiale Einschnittstiefe senkrecht zur Haupterstreckungsrichtung verläuft und gemessen wird. Die Profilblockhöhe ist im Rahmen der vorliegenden Erfindung die maximale Erstreckung des Profilblocks von der Kontaktfläche des Profilblockelements bis hin zur Lauffläche des Fahrzeugluftreifens, wobei die Distanz bevorzugt senkrecht von der Kontaktfläche des Profilblockelements entlang der Wand des Profilblockelements bis hin zur Lauffläche des Fahrzeugluftreifens gemessen wird (vergleiche auch Figur 5, Bezugszeichen 17). Besonders bevorzugt ist dabei, dass der Feineinschnitt eine radiale Einschnittstiefe, bevorzugt eine maximale radiale Einschnittstiefe, von 50 % bis 100 % der radialen Profilblockhöhe aufweist, da solche Feineinschnitte zu einer erhöhten Schneetraktion führen im Vergleich mit Feineinschnitten, welche eine radiale Einschnittstiefe von 0 % bis 50 % der radialen Profilblockhöhe aufweisen.

Bevorzugt ist auch ein Fahrzeugluftreifen wie vorstehend beschrieben oder wie vorstehend als bevorzugt beschrieben, wobei der rinnenförmige Bereich auf Höhe zwischen 20 % bis 80 % der maximalen radialen Einschnittstiefe des Feineinschnitts verläuft.

Der vorstehend beschriebene Aspekt der Erfindung hat den Vorteil, dass der Formschluss zwischen den Wänden des vorstehend beschriebenen Feineinschnitts optimiert wird und somit die Steifigkeit des Profilblockelements verbessert werden kann. Ebenfalls können durch den Einsatz eines vorstehend beschriebenen rinnenförmigen Bereichs die bereits erwähnten unerwünschten Verbiegungen der Feineinschnittswände beim Bremsen noch weiter reduziert oder gänzlich verhindert werden.

Optimal ist es, wenn der rinnenförmige Bereich auf Höhe von 50 % maximalen radialen Einschnittstiefe des Feineinschnitts verläuft.

Bevorzugt ist ein Fahrzeugluftreifen wie vorstehend beschrieben oder wie vorstehend als bevorzugt beschrieben, wobei sich der Feineinschnitt in einem Schulterprofilblockelement befindet und der Feineinschnitt die Form eines konkaven Prismas mit einer Prismenhöhe Lp und mit parallel zur Kontaktfläche des Laufstreifens verlaufenden Grundflächen aufweist, wobei der rinnenförmige Bereich bevorzugt vom geometrischen Mittelpunkt des konkaven Prismas nach außen hin geformt ist.
Die Grundfläche des vorstehend beschriebenen konkaven Prismas ist dabei bevorzugt ein Polygon mit n Ecken, wobei n besonders bevorzugt größer als 5 ist. Jedes einzelne Schulterprofilblockelement dieser Schulterprofilblockelemente, welche mindestens einen Feineinschnitt wie vorstehend beschriebenen aufweisen, weist bevorzugt jeweils eine Anzahl von Feineinschnitte von 1 bis 10 auf, bevorzugt 2 bis 6 Feineinschnitte.

Im Rahmen der vorliegenden Erfindung ist ein Prisma ein geometrischer Körper, dessen Seitenkanten parallel und gleich lang sind und dessen deckungsgleiche Grundflächen jeweils ein Polygon sind. Ein konkaves Prisma ist im Rahmen der vorliegenden Erfindung ein Prisma, bei dem mindestens ein Innenwinkel der Grundfläche des Prismas einen Winkel von größer als 180° aufweist, bevorzugt größer als 200°, besonders bevorzugt größer als 250°, besonders bevorzugt größer als 300°.

Der vorstehend beschriebene Aspekt der Erfindung hat den Vorteil, dass nicht nur Kanten entlang der axialen Richtung oder der Umfangsrichtung, sondern gleichzeitig in beide Richtungen gebildet werden und somit ein besserer Umgang mit in unterschiedliche Richtungen wirkende Kräften erreicht werden kann, welche insbesondere während des Fahrens von Kurven auftreten. Dies gilt insbesondere für acht-, neun- und zehneckige konkave Prismen, da diese gegenüber Prismen mit weniger Ecken eine optimale Anzahl an Kanten und somit eine verbesserte Schneetraktion bewirken.

Bevorzugt ist ein Fahrzeugluftreifen wie vorstehend beschrieben oder wie vorstehend als bevorzugt beschrieben, wobei sämtliche Innenwinkel zwischen zwei aneinander liegenden Seitenflächen des Prismas einen Winkel von 90° oder 270° bilden und das Prisma bevorzugt ein achteckiges konkaves Prisma ist.
Der vorstehend beschriebene Aspekt der Erfindung hat den Vorteil, dass aufgrund der vorstehend beschriebenen Vorgaben an die Winkel des Prismas ein Prisma entsteht, bei dem mindestens eine Nebenerstreckung mit einer Nebenerstreckungsrichtung senkrecht zur Haupterstreckungsrichtung entsteht. Dies führt in Fahrzeugluftreifen wie vorstehend beschrieben dazu, dass sowohl Querkräfte als auch Kräfte in Umfangsrichtung optimal abgefangen werden können.
Bevorzugt ist auch ein Fahrzeugluftreifen wie vorstehend beschrieben oder wie vorstehend als bevorzugt beschrieben, wobei das konkave Prisma ein gerades konkaves Prisma ist. Der vorstehend beschriebene Aspekt der Erfindung hat den Vorteil, dass die Position der Feineinschnittsöffnung in der Kontaktfläche des Profilblockelements immer gleich bleibt. Dies hat den Vorteil, dass die Schneetraktion nach längerem Gebrauch weniger variiert.

Erfindungsgemäß ist ein Fahrzeugluftreifen bei welchem sich der Feineinschnitt in mindestens einem Schulterprofilblockelement befindet und wobei
- ein Querschnitt des Feineinschnitts u-förmig ist
   und
- der Feineinschnitt eine Haupterstreckung entlang einer Haupterstreckungsrichtung sowie zwei Nebenerstreckungen jeweils entlang einer Nebenerstreckungsrichtung aufweist. Die Querschnittsebene des rinnenförmigen Bereichs, entlang derer der vorstehend beschriebene Querschnitt gebildet wird, ist dabei senkrecht zum Normalvektor der Kontaktfläche des vorstehend beschriebenen Schulterprofilblockelements.

Der vorstehend beschriebene Aspekt der Erfindung hat den Vorteil, dass nicht nur Kanten entlang der axialen Richtung oder entlang der Umfangsrichtung, sondern gleichzeitig in beide Richtungen gebildet werden und somit ein optimierter Umgang mit Querkräften und Umfangskräften, welche insbesondere während des Fahrens von Kurven auftreten, erreicht werden kann. Im Rahmen der vorliegenden Erfindung erstreckt sich die Rinnenlänge entlang der Haupterstreckungsrichtung und vorzugsweise ebenfalls über mindestens eine Nebenerstreckungsrichtung.

Im Rahmen der vorigen Erfindung ergibt die Summe der Beträge der Längen der beiden Nebenerstreckungen und des Betrags der Länge der Haupterstreckung die Gesamterstreckungslänge L_{GES} des Feineinschnitts.

Im Rahmen der vorliegenden Erfindung weisen mindestens 10 %, bevorzugt mindestens 20 %, besonders bevorzugt mindestens 30 %, ganz besonders bevorzugt mindestens 50 %, insbesondere ganz besonders bevorzugt mindestens 70 %, in besonders hohem Maße ganz besonders bevorzugt mindestens 90 % der einzelnen Schulterprofilblockelemente wie vorstehend beschrieben mindestens einen Feineinschnitt wie vorstehend beschriebenen auf. Jedes einzelne Schulterprofilblockelement dieser Schulterprofilblockelemente, welche mindestens einen Feineinschnitt wie vorstehend beschriebenen aufweisen, weist bevorzugt jeweils eine Anzahl von Feineinschnitte von 1 bis 10 auf, bevorzugt 2 bis 6.

Im Rahmen der vorliegenden Erfindung verläuft die Haupterstreckung und/oder Nebenerstreckung des Feineinschnittes bevorzugt gradlinig oder bogenförmig, besonders bevorzugt gradlinig. Ganz besonders bevorzugt verläuft die Haupterstreckung des Feineinschnittes nicht sinusförmig.
Zudem müssen die Winkel zwischen Nebenerstreckungen und Haupterstreckung nicht unbedingt 90° ergeben. Andere Winkel sind denkbar, um das Fahrverhalten des Fahrzeugluftreifens in speziellen Fall Situationen zu verbessern. Auch können die Kanten, die sich zwischen Haupterstreckung und Nebenerstreckung bilden, abgerundet sein und somit keine "scharfen" Kanten darstellen.

Ganz besonders bevorzugt ist ein Fahrzeugluftreifen wie vorstehend als besonders bevorzugt beschrieben, wobei die Haupterstreckungsrichtung des Feineinschnitts parallel zur Umfangsrichtung des Fahrzeugluftreifens ist und/oder sich die Nebenerstreckungsrichtungen des Feineinschnitts axial von der Haupterstreckung in Richtung einer Reifenschulter erstrecken.

Der vorstehend beschriebene Aspekt der Erfindung hat den Vorteil, dass die vorstehend beschriebene Anordnung der Haupterstreckungsrichtung und der
Nebenerstreckungsrichtungen im Schulterprofilblockelement auf verschneitem Untergrund dazu führt, dass die Kante des Feineinschnittes entlang der Hauterstreckungsrichtung sehr gut die Querkräfte beim Kurvenfahren und die Kanten entlang der Nebenerstreckungsrichtungen sehr gut die Kräfte entlang der Umfangsrichtung abfangen.

Insbesondere besonders bevorzugt ist auch ein Fahrzeugluftreifen wie vorstehend als ganz besonders bevorzugt beschrieben, wobei die Länge L_{HES} der Haupterstreckung entlang der Haupterstreckungsrichtung 10 % bis 90 %, bevorzugt 30 % bis 70 %, der Gesamterstreckungslänge L_{GES} des Feineinschnitts ausmacht und/oder die zwei Nebenerstreckungen gleich lang sind. Besonders bevorzugt ist die Länge L_{HES} der Haupterstreckung nur so lang, dass der rinnenförmige Bereich sich zumindest über eine Nebenerstreckung erstreckt, ganz besonders bevorzugt über beide Nebenerstreckungen erstreckt.

Der vorstehend beschriebene Aspekt der Erfindung hat den Vorteil, dass durch den Einsatz eines vorstehend beschriebenen rinnenförmigen Bereichs die bereits erwähnten unerwünschten Verbiegungen der Feineinschnittswände beim Bremsen reduziert oder gänzlich verhindert werden können. Zudem hat der vorstehend beschriebene Aspekt der Erfindung hat den Vorteil, dass Kräfte aus unterschiedlichen Richtungen aufgenommen werden können.

Insbesondere besonders bevorzugt ist auch ein Fahrzeugluftreifen wie vorstehend als besonders bevorzugt beschrieben oder wie vorstehend als ganz besonders bevorzugt beschrieben oder wie vorstehend als insbesondere besonders bevorzugt beschrieben, wobei sich der rinnenförmige Bereich in Form einer Sicke über die Haupterstreckung und mindestens über eine Nebenerstreckung, bevorzugt über beide Nebenerstreckung, erstreckt, wobei die Rinnenlänge L_{R} besonders bevorzugt der Gesamterstreckungslänge L_{GES} des Feineinschnitts entspricht, sodass der rinnenförmige Bereich die Form einer offenen Sicke darstellt.

Der vorstehend beschriebene Aspekt der Erfindung hat den Vorteil, dass aufgrund der umlaufenden Sicke auch nach längerem Abrieb die Geometrie der Feineinschnittsöffhung und somit auch die Kantenlänge und die Kantenanzahl konstant bleiben. Siehe hierzu auch die bereits weiter oben beschriebenen Ausführungen zur offenen Sicke. Ebenfalls können durch den Einsatz eines vorstehend beschriebenen rinnenförmigen Bereichs die bereits erwähnten unerwünschten Verbiegungen der Feineinschnittswände beim Bremsen noch weiter reduziert oder gänzlich verhindert werden.

Insbesondere besonders bevorzugt ist auch ein Fahrzeugluftreifen wie vorstehend als besonders bevorzugt beschrieben oder wie vorstehend als ganz besonders bevorzugt beschrieben oder wie vorstehend als insbesondere besonders bevorzugt beschrieben, sich der rinnenförmige Bereich zum zentralen Laufstreifenbereich hin wölbt, das heißt, dass sich die Richtung der vorstehend beschriebenen Wölbung entlang der Rinnenhöhe des rinnenförmigen Bereichs hin zum zentralen Laufstreifenbereich erstreckt.

Die Erfindung betrifft auch einen Fahrzeugluftreifen, wobei sich mindestens ein erster Feineinschnitt wie vorstehend beschrieben oder wie vorstehend als bevorzugt beschrieben in mindestens einem Zentralprofilblockelement befindet und sich mindestens ein zweiter Feineinschnitt, welcher vorstehend für einen Feineinschnitt in einem Schulterprofilblockelement beschrieben oder vorstehend für einen als bevorzugt ausgeführten Feineinschnitt in einem Schulterprofilblockelement beschrieben ist, in mindestens einem Schulterprofilblockelement befindet. Der Feineinschnitt in einem Schulterprofilblockelement ist dabei bevorzugt räumlich getrennt von einer Block- und einer Umfangsrille und der Feineinschnitt in einem Zentralprofilblockelement mündet dabei bevorzugt in eine Block- und/oder eine Umfangsrille.

Der vorstehend beschriebene Aspekt der Erfindung hat den Vorteil, dass durch das Vorhandensein von Feineinschnitten in Schulterprofilblockelementen und in Zentralprofilblockelementen desgleichen Fahrzeugluftreifens der vorstehend beschriebene Zielkonflikt zwischen dem Trockenfahrverhalten und dem Fahrverhalten auf nicht trockenem Untergrund optimal gelöst wird. Ein solcher Fahrzeugluftreifen eignet sich daher besonders gut als All-Season-Fahrzeugluftreifen, insbesondere als All-Season-Fahrzeugluftreifen für PKWs.

Die vorstehend beschriebenen vorteilhaften Aspekte eines Feineinschnitts in einem Schulterprofilblockelement eines erfindungsgemäßen Fahrzeugluftreifen und die vorstehend beschriebenen vorteilhaften Aspekte eines Feineinschnitts in einem Zentralprofilblockelement eines erfindungsgemäßen Fahrzeugluftreifen gelten auch für sämtliche Aspekte eines erfindungsgemäßen Fahrzeugluftreifens wie vorstehend beschrieben, welcher Feineinschnitte in einem Schulterprofilblockelement und zusätzlich entsprechende Feineinschnitte in einem Zentralprofilblockelement aufweist.
Jedes einzelne Schulter- oder Zentralprofilblockelement der Gesamtheit an Profilblockelemente, welche mindestens einen Feineinschnitt wie vorstehend beschriebenen aufweisen, weist bevorzugt jeweils eine Anzahl von Feineinschnitte von 1 bis 10 auf, bevorzugt 2 bis 6 Feineinschnitte.

In besonders großem Maße bevorzugt ist ein Fahrzeugluftreifen wie vorstehend beschrieben dadurch gekennzeichnet, dass
der Feineinschnitt einen rinnenförmigen Bereich in Form einer Sicke und mit einer parallel zur Kontaktfläche verlaufenden Rinnenlänge L_{R} aufweist, wobei die Rinnenlänge L_{R} 80 % bis 100 % der Gesamterstreckungslänge L_{GES} des Feineinschnitts entspricht,
wobei sich der Feineinschnitt in einem Schulterprofilblockelement befindet
   und
wobei ein Querschnitt des Feineinschnitts u-förmig ist,
wobei der Feineinschnitt eine Haupterstreckung entlang einer Haupterstreckungsrichtung sowie zwei Nebenerstreckungen jeweils entlang einer Nebenerstreckungsrichtung aufweist,
wobei der rinnenförmige Bereich zum zentralen Laufstreifenbereich hin gewölbt ist,
wobei die Haupterstreckungsrichtung des Feineinschnitts parallel zur Umfangsrichtung des Fahrzeugluftreifens ist und sich die Nebenerstreckungsrichtungen des Feineinschnitts axial von der Haupterstreckung in Richtung Reifenschultern erstrecken,
wobei sich der rinnenförmige Bereich in Form einer Sicke über die Haupterstreckung und über die beiden Nebenerstreckungen erstreckt,
wobei die Länge L_{HES} der Haupterstreckung entlang der Haupterstreckungsrichtung 40 % bis 60 % der Gesamterstreckungslänge L_{GES} des Feineinschnitts ausmacht und die zwei Nebenerstreckungen gleich lang sind.

Weitere Merkmale, Vorteile und Einzelheiten, auf die die Erfindung in ihrem Umfang aber nicht beschränkt ist, werden nun anhand der Zeichnungen näher beschrieben.

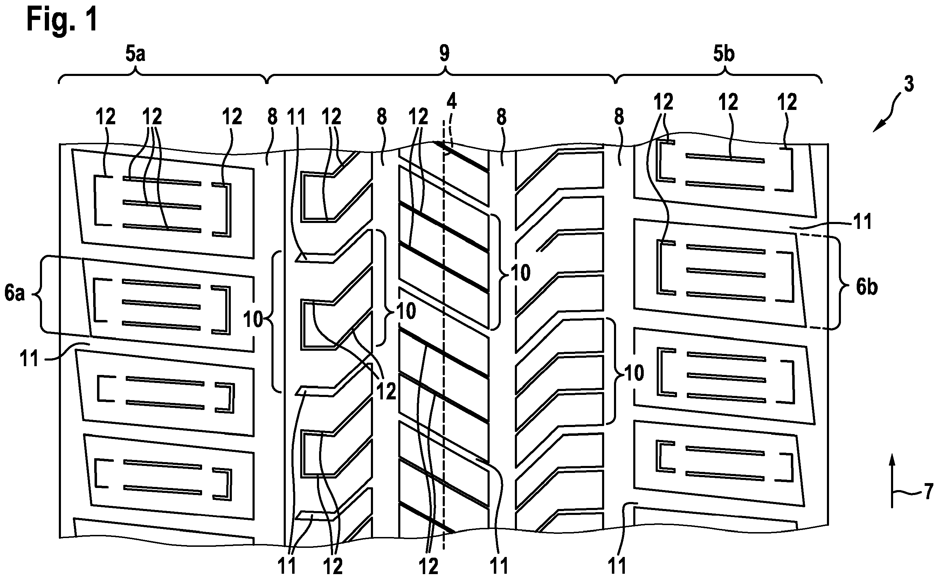

Figur 1 zeigt eine schematische Darstellung eines Laufstreifens 3 eines erfindungsgemäßen Fahrzeugluftreifens gemäß einer ersten Ausführungsform in Draufsicht, wobei zwei Reifenschultern 5a, 5b mit Reihen von Schulterprofilblockelementen 6a, 6b und einem zentralen Laufstreifenbereich 9 mit Reihen von Zentralprofilblockelemente 10 gezeigt sind. Der Laufstreifen 3 weist zudem Umfangsrillen 8, Querrillen 11 und Feineinschnitte 12 auf. Außerdem ist der Reifenzenit 4 in der Mitte des Laufstreifens 3 in Form einer gestrichelten Linie dargestellt. In Figur 1 sind Feineinschnitte 12 in den Schulterprofilblockelementen 6a, 6b räumlich getrennt von Querrillen 11 und Umfangsrillen 8, während die Feineinschnitte 12 in den Zentralprofilblockelementen 10 in Umfangsrillen 8 münden.

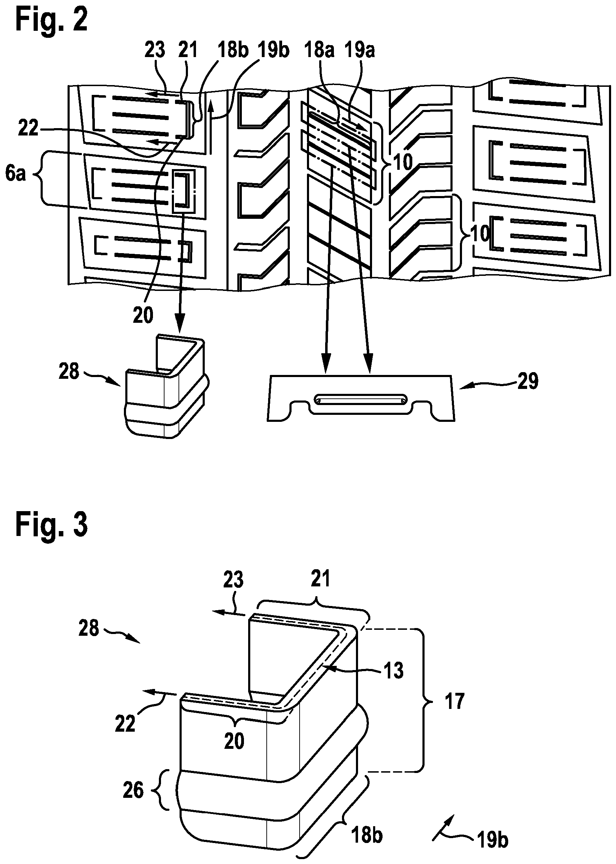

Figur 2 zeigt eine schematische Darstellung eines Laufstreifens 3 eines erfindungsgemäßen Fahrzeugluftreifens in einer weiteren Ausführungsform in Draufsicht, wobei zudem ein Lamellenblech 28 zur Herstellung eines Feineinschnittes in einem Schulterprofilblockelement und ein Lamellenblech 29 zur Herstellung eines Feineinschnittes in einem Zentralprofilblockelement 10 schematisch dargestellt sind. Auch dargestellt sind die Haupterstreckungsrichtung 19a und die Haupterstreckung 18a des Zentralprofilblockelements 10 sowie die Haupterstreckungsrichtung 19b und die Haupterstreckung 18b als auch die Nebenerstreckungsrichtungen 22, 23 und die Nebenerstreckung 20, 21 des Schulterprofilblockelementen 6a.

Figur 3 zeigt eine schematische Darstellung eines Lamellenbleches 28 zur Herstellung eines Feineinschnittes in einem Schulterprofilblockelement. Dargestellt sind die Äquivalente der Nebenerstreckungsrichtungen 22, 23, der Nebenerstreckungen 21, 20, der Haupterstreckung 18b, der Hauterstreckungsrichtung 19b, der Gesamterstreckungslänge L_{GES} 13, der Rinnenbreite 26 und der Einschnittstiefe eines Feineinschnittes, welche durch ein entsprechendes Lamellenblech 28 wie in Figur 3 dargestellt hergestellt werden könnten.

Figur 4a zeigt eine schematische Darstellung eines Lamellenbleches 29 zur Herstellung eines Feineinschnittes in einem Zentralprofilblockelement von einer ersten Seite. Dargestellt sind die Äquivalente der Rinnenbreite 26, die Haupterstreckungsrichtung 19a und der Haupterstreckung 18a sowie der erste, untere Abschnitt 24, der zweite, obere Abschnitt 25 und der dritte mittlere Abschnitt 30 eines Feineinschnittes, welche durch ein entsprechendes Lamellenblech 29 wie in Figur 3 dargestellt hergestellt werden könnten. Die Länge der Haupterstreckung 18a eines durch das in Figur 4a gezeigte Lamellenblech 29 hergestellten Feineinschnittes entspräche betragsmäßig der Gesamterstreckungslänge L_{GES} des entsprechenden Feineinschnittes. Zudem ist die Rinnenlänge L_{RL} 15 des rinnenförmigen Bereichs 14 eingezeichnet, welche genau der Länge des Obergurtes des rinnenförmigen Bereichs 14 in Form einer Sicke entspricht. Die Wölbung des rinnenförmigen Bereiches 14 in Form einer Sicke zeigt in Figur 4a in die Papierebene hinein.

Figur 4b zeigt eine schematische Darstellung eines Lamellenbleches 29 zur Herstellung eines Feineinschnittes in einem Zentralprofilblockelement von einer zweiten der ersten Seite gegenüberliegenden Seite. Dargestellt sind die Äquivalente der Rinnenbreite 26, die Haupterstreckungsrichtung 19a und der Haupterstreckung 18a sowie der erste, untere Abschnitt 24, der zweite, obere Abschnitt 25 und der dritte mittlere Abschnitt 30 eines entsprechenden Feineinschnittes, welche durch ein entsprechendes Lamellenblech 29 wie in Figur 3 dargestellt hergestellt werden könnten. Die Länge der Haupterstreckung 18a eines durch das in Figur 4b gezeigte Lamellenblech 29 hergestellten Feineinschnittes entspräche betragsmäßig der Gesamterstreckungslänge L_{GES} des entsprechenden Feineinschnittes. Zudem ist die Rinnenlänge L_{RL} 15 des rinnenförmigen Bereichs 14 eingezeichnet, welche genau der Länge des Obergurtes des rinnenförmigen Bereichs 14 in Form einer Sicke entspricht. Die Wölbung des rinnenförmigen Bereiches 14 in Form einer Sicke zeigt in Figur 4b aus der Papierebene heraus.

Figur 5 zeigt eine schematische Darstellung eines Querschnitts durch einen Feineinschnitt in einem Zentralprofilblockelement oder in einem Schulterprofilblockelement eines Fahrzeugluftreifens in einer weiteren Ausführungsform. Dargestellt ist die Einschnittstiefe 17, die Kontaktfläche 2 der Profilblockelementen und der Laufstreifen 3. Des Weiteren sind der erste, unteren Abschnitt 24 des Feineinschnittes 12, der zweite, oberer Abschnitt 25 des Feineinschnittes 12 und der dritte Abschnitt 30 des Feineinschnittes 12 dargestellt. In der Vergrößerung auf der rechten Seite der Figur 5 ist ein Ausschnitt des dritten Abschnitts 30 des Feineinschnittes 12 dargestellt. In der Vergrößerung kann der Kreisbogen 16, welcher durch den rinnenförmigen Bereich im Querschnitt gebildet wird, gesehen werden. Zudem wird die obere Hälfte der Rinnenhöhe 27 von einem Rechteck A und die oberen 50 Prozent der oberen Hälfte der Rinnenhöhe 27 von einem Rechteck B umschlossen. Die obere Hälfte der Rinnenhöhe und die oberen 50 Prozent der oberen Hälfte der Rinnenhöhe wurden bereits zuvor beschrieben.

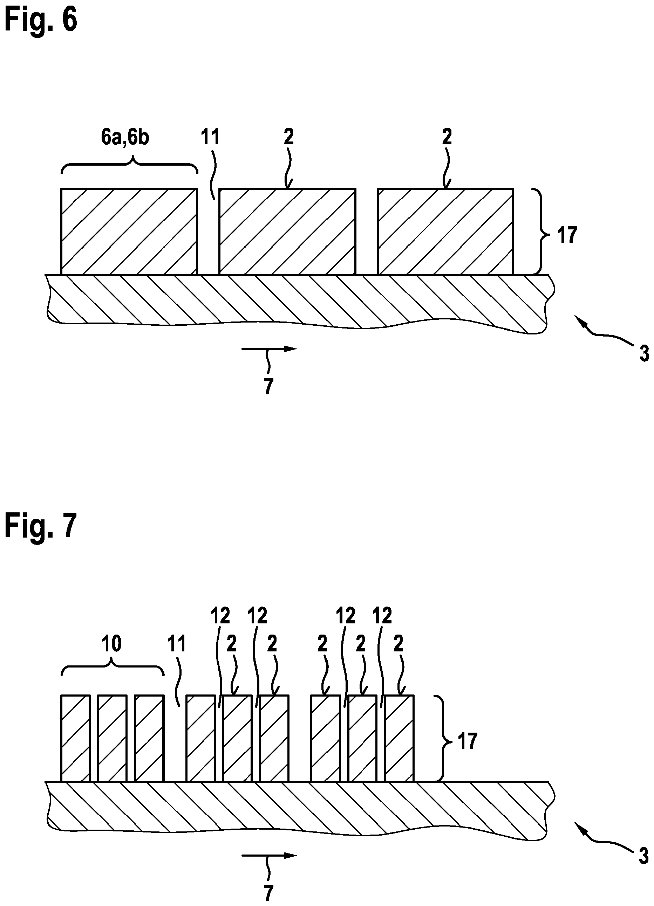

Figur 6 zeigt eine schematische Darstellung einer Seitenansicht auf die Seitenwände einer Reihe von Schulterprofilblockelementen 6a, 6b, wobei der Standpunkt des Betrachters in einer Umfangsrille liegt, welche die Reifenschulter von dem zentralen Laufstreifenbereich trennt. Dargestellt sind zudem die maximale radiale Einschnittstiefe 17, der Laufstreifen 3, die Umfangsrichtung 7, die Querrillen 11 und die Kontaktfläche 2 der Schulter Profilblockelemente 6a, 6b.

Figur 7 zeigt eine schematische Darstellung einer Seitenansicht auf die Seitenwände einer Reihe von Zentralprofilblockelementen 10, wobei der Standpunkt des Betrachters in einer Umfangsrille liegt, welche die Reifenschulter von dem zentralen Laufstreifenbereich trennt. Dargestellt sind zudem die maximale radiale Einschnittstiefe 17, der Laufstreifen 3, die Umfangsrichtung 7, die Querrillen 11 und die Kontaktfläche 2 der Zentralprofilblockelemente 10 sowie mehrere Feineinschnitte 12.

### Bezugszeichenliste:

- 1: Fahrzeugluftreifen
- 2: Kontaktfläche
- 3: Laufstreifen
- 4: Reifenzenit
- 5a, 5b: Reifenschulter
- 6a, 6b: Schulterprofilblockelement
- 7: Umfangsrichtung
- 8: Umfangsrille
- 9: zentraler Laufstreifenbereich
- 10: Zentralprofilblockelement
- 11: Querrillen
- 12: Feineinschnitt
- 13: Gesamterstreckungslänge
- 14: rinnenförmiger Bereich
- 15: Rinnenlänge
- 16: Kreisbogen
- 17: maximale radiale Einschnittstiefe
- 18a: Haupterstreckung eines Schulterprofilblockelementes
- 18b: Haupterstreckungsrichtung eines Zentralblockelementes
- 19a: Haupterstreckung eines Zentralblockelementes
- 19b: Haupterstreckungsrichtung eines Schulterprofilblockelementes
- 20,21: Nebenerstreckung
- 22,23: Nebenerstreckungsrichtung
- 24: erster, unterer Abschnitt des Feineinschnittes
- 25: zweiter, oberer Abschnitt des Feineinschnittes
- 26: Rinnenbreite
- 27: Rinnenhöhe
- 28: Lamellenblech für Schulterprofilblockelement
- 29: Lamellenblech für Zentralprofilblockelement
- 30: Dritter, mittlerer Abschnitt des Feineinschnittes

## Patentansprüche

1. Fahrzeugluftreifen mit einem eine Kontaktfläche (2) umfassenden Laufstreifen (3),
wobei der Laufstreifen (3) ausgehend von einem Reifenzenit (4) zu Reifenschultern (5a, 5b) hin Reihen von Schulterprofilblockelementen (6a, 6b) aufweist,
wobei die Reihen von Schulterprofilblockelementen (6a, 6b) durch in Umfangsrichtung (7) umlaufende Umfangsrillen (8) von einem zentralen Laufstreifenbereich (9) mit einer oder mehreren Reihen von Zentralprofilblockelementen (10) getrennt sind,
wobei in den Reihen von Schulterprofilblockelementen (6a, 6b) einzelne Schulterprofilblockelemente (6a, 6b) durch Querrillen (10) voneinander getrennt sind
und
wobei in der oder in den Reihen von Zentralprofilblockelementen (10) einzelne Zentralprofilblockelemente (10) durch Querrillen (10) voneinander getrennt sind,
wobei mindestens ein Profilblockelement aus der Gesamtheit der Schulterprofilblockelemente (6a, 6b) und der Zentralprofilblockelemente (10) mindestens einen Feineinschnitt (12) aufweist, wobei der Feineinschnitt (12) eine parallel zur Kontaktfläche (2) verlaufenden Gesamterstreckungslänge L_{GES} (13) aufweist, wobei der Feineinschnitt (12) einen rinnenförmigen Bereich (14) in Form einer Sicke und mit einer parallel zur Kontaktfläche (2) verlaufenden Rinnenlänge L_{R} (15) aufweist, wobei die Rinnenlänge L_{R} (15) 20 % bis 100 % der Gesamterstreckungslänge L_{GES} (13) des Feineinschnitts (12) entspricht, **dadurch gekennzeichnet, dass** sich der Feineinschnitt (12) in mindestens einem Schulterprofilblockelement (6a, 6b) befindet und
- ein Querschnitt des Feineinschnitts (12) u-förmig ist
und
- der Feineinschnitt (12) eine Haupterstreckung (18b) entlang einer Haupterstreckungsrichtung (19b) sowie zwei Nebenerstreckungen (20, 21) jeweils entlang einer Nebenerstreckungsrichtung (22, 23) aufweist.

2. Fahrzeugluftreifen nach Anspruch 1, wobei der Feineinschnitt (12) räumlich getrennt von einer Block- und einer Umfangsrille (8) ist.

3. Fahrzeugluftreifen nach einem der vorangehenden Ansprüche, wobei die Rinnenlänge L_{R} (15) 40 % bis 100% der Gesamterstreckungslänge L_{GES} (13) des Feineinschnitts (12) entspricht.

4. Fahrzeugluftreifen nach einem der vorangehenden Ansprüche, wobei der rinnenförmige Bereich (14)
- eine sich radial erstreckenden Rinnenbreite B_{R} (26) von 1,0 mm bis 5,0 mm aufweist,
und/oder
- eine sich zur Rinnenlänge (15) und Rinnenbreite (26) senkrecht erstreckenden Rinnenhöhe H_{R} (27) von 0,2 mm bis 2,0 mm aufweist.

5. Fahrzeugluftreifen nach einem der vorangehenden Ansprüche, wobei der Feineinschnitt (12) einen rinnenförmigen Bereich (14) in Form einer Halbrund-, Kasten-, Dreiecks- oder Trapezsicke aufweist,
wobei der Feineinschnitt (12) bevorzugt einen rinnenförmigen Bereich (14) in Form einer Halbrundsicke aufweist, wobei ein Querschnitt des rinnenförmigen Bereichs (14) in Form einer Halbrundsicke einen Kreisbogen (16) mit einem Radius r und mit einem Mittelpunktswinkel α darstellt, wobei
- der Radius r im Bereich von 0,5 mm bis 2,0 mm liegt und/oder
- der Winkel α im Bereich von 45° bis 270° liegt.

6. Fahrzeugluftreifen nach einem der vorangehenden Ansprüche, wobei der rinnenförmige Bereich (14) auf Höhe zwischen 20 % bis 80 % der maximalen radialen Einschnittstiefe (17) des Feineinschnitts (12) verläuft.

7. Fahrzeugluftreifen nach Anspruch 1, wobei die Haupterstreckungsrichtung (19b) des Feineinschnitts (12) parallel zur Umfangsrichtung (7) des Fahrzeugluftreifens (1) ist und sich die Nebenerstreckungsrichtungen (22, 23) des Feineinschnitts (12) axial von der Haupterstreckung (18b) in Richtung einer Reifenschulter (5a, 5b) erstrecken.

8. Fahrzeugluftreifen nach Anspruch 7, wobei die Länge L_{HES} der Haupterstreckung (18b) entlang der Haupterstreckungsrichtung (19b) 10 % bis 90 % der Gesamterstreckungslänge L_{GES} (13) des Feineinschnitts (12) ausmacht und/oder die zwei Nebenerstreckungen (20, 21) gleich lang sind.

9. Fahrzeugluftreifen nach einem der Ansprüche 1, 7 bis 8, wobei sich der rinnenförmige Bereich (14) in Form einer Sicke
- über die Haupterstreckung (18b) und über mindestens eine Nebenerstreckung (20, 21) erstreckt
und/oder
- zum zentralen Laufstreifenbereich (9) hin wölbt.

10. Fahrzeugluftreifen nach einem der vorangehenden Ansprüche, wobei sich mindestens ein weiterer Feineinschnitt (12) wie in der Präambel des Anspruchs 1 definiert in mindestens einem Zentralprofilblockelement (10) befindet.

## Claims

1. Pneumatic vehicle tyre with a tread (3) comprising a contact surface (2),
wherein the tread (3) has rows of shoulder profile block elements (6a, 6b) extending from a tyre crown (4) to tyre shoulders (5a, 5b),
wherein the rows of shoulder profile block elements (6a, 6b) are separated from a central tread region (9) with one or more rows of central profile block elements (10) by circumferential grooves (8) running around in the circumferential direction (7), wherein, in the rows of shoulder profile block elements (6a, 6b), individual shoulder profile block elements (6a, 6b) are separated from one another by transverse grooves (10),
and
wherein, in the row or rows of central profile block elements (10), individual central profile block elements (10) are separated from one another by transverse grooves (10),
wherein at least one profile block element of all the shoulder profile block elements (6a, 6b) and the central profile block elements (10) has at least one sipe (12), wherein the sipe (12) has an overall length of extent L_{GES} (13), running parallel to the contact surface,
wherein
the sipe (12) has a channel-shaped region (14) in the form of a bead and with a channel length L_{R} (15), running parallel to the contact surface (2), wherein the channel length L_{R} (15) corresponds to 20% to 100% of the overall length of extent L_{GES} (13) of the sipe (12),
**characterized in that**
the sipe (12) is located in at least one shoulder profile block element (6a, 6b) and
- a cross section of the sipe (12) is u-shaped
and
- the sipe (12) has a main extent (18b), along a main direction of extent (19b), and two secondary extents (20, 21), respectively along a secondary direction of extent (22, 23).

2. Pneumatic vehicle tyre according to Claim 1, wherein the sipe (12) is spatially separate from a block groove and a circumferential groove (8).

3. Pneumatic vehicle tyre according to one of the preceding claims, wherein the channel length L_{R} (15) corresponds to 40% to 100% of the overall length of extent L_{GES} (13) of the sipe (12) .

4. Pneumatic vehicle tyre according to one of the preceding claims, wherein the channel-shaped region (14)
- has a radially extending channel width B_{R} (26) of 1.0 mm to 5.0 mm,
and/or
- has a channel height H_{R} (27), extending perpendicularly to the channel length (15) and channel width (26), of 0.2 mm to 2.0 mm.

5. Pneumatic vehicle tyre according to one of the preceding claims, wherein the sipe (12) has a channel-shaped region (14) in the form of a half-round, box-shaped, triangular or trapezoidal bead, wherein the sipe (12) preferably has a channel-shaped region (14) in the form of a half-round bead, wherein a cross section of the channel-shaped region (14) in the form of a half-round bead represents an arc of a circle (16) with a radius r and with a centre angle a, wherein
- the radius r lies in the range from 0.5 mm to 2.0 mm
and/or
- the angle α lies in the range from 45° to 270°.

6. Pneumatic vehicle tyre according to one of the preceding claims, wherein the channel-shaped region (14) runs at a height between 20% and 80% of the maximum radial cut-in depth (17) of the sipe (12).

7. Pneumatic vehicle tyre according to Claim 1, wherein the main direction of extent (19b) of the sipe (12) is parallel to the circumferential direction (7) of the pneumatic vehicle tyre (1) and the secondary directions of extent (22, 23) of the sipe (12) extend axially from the main extent (18b) in the direction of a tyre shoulder (5a, 5b).

8. Pneumatic vehicle tyre according to Claim 7, wherein the length L_{HES} of the main extent (18b) along the main direction of extent (19b) makes up 10% to 90% of the overall length of extent L_{GES} (13) of the sipe (12) and/or the two secondary extents (20, 21) are of the same length.

9. Pneumatic vehicle tyre according to one of Claims 1, 7 to 8, wherein the channel-shaped region (14) in the form of a bead
- extends over the main extent (18b) and over at least one secondary extent (20, 21)
and/or
- curves toward the central tread region (9).

10. Pneumatic vehicle tyre according to one of the preceding claims, wherein there is at least one further sipe (12) as defined in the preamble of Claim 1 in at least one central profile block element (10).

## Revendications

1. Pneumatique de véhicule doté d'une bande de roulement (3) comprenant une surface de contact (2),
la bande de roulement (3) présentant des rangées d'éléments de bloc de sculpture d'épaule (6a, 6b) en partant d'un zénith du pneu (4) jusqu'aux épaules du pneu (5a, 5b),
les rangées d'éléments de bloc de sculpture d'épaule (6a, 6b) étant séparées d'une zone de bande de roulement centrale (9) comprenant une ou plusieurs rangées d'éléments de bloc de sculpture centraux (10) par des rayures circonférentielles (8) tournant dans la direction circonférentielle (7),
dans lequel, dans les rangées d'éléments de bloc de sculpture d'épaule (6a, 6b), des éléments de bloc de sculpture d'épaule (6a, 6b) individuels sont séparés les uns des autres par des rayures transversales (10), et
dans lequel, dans la ou les rangées d'éléments de bloc de sculpture centraux (10), des éléments de bloc de sculpture centraux (10) individuels sont séparés les uns des autres par des rayures transversales (10),
dans lequel au moins un élément de bloc de sculpture de l'ensemble des éléments de bloc de sculpture d'épaule (6a, 6b) et des éléments de bloc de sculpture centraux (10) présente au moins une entaille fine (12), l'entaille fine (12) présentant une longueur de dimension totale L_{GES} (13) s'étendant en parallèle à la surface de contact (2),
dans lequel
l'entaille fine (12) présentant une zone en forme de rainure (14) sous la forme d'une moulure et ayant une longueur de rainure L_{R} (15) s'étendant en parallèle à la surface de contact (2), la longueur de rainure L_{R} (15) mesurant de 20 % à 100 % de la longueur de dimension totale L_{GES} (13) de l'entaille fine (12),
**caractérisé en ce que** l'entaille fine (12) se trouve dans au moins un élément de bloc de sculpture d'épaule (6a, 6b), et
- une section transversale de l'entaille fine (12) présente une forme de U, et
- l'entaille fine (12) présente une dimension principale (18b) le long d'une direction de dimension principale (19b) ainsi que deux dimensions secondaires (20, 21) respectivement le long d'une direction de dimension secondaire (22, 23).

2. Pneumatique de véhicule selon la revendication 1, dans lequel l'entaille fine (12) est physiquement séparée d'une rayure de bloc et d'une rayure circonférentielle (8).

3. Pneumatique de véhicule selon l'une quelconque des revendications précédentes, dans lequel la longueur de rainure L_{R} (15) mesure de 40 % à 100 % de la longueur de dimension totale L_{GES} (13) de l'entaille fine (12).

4. Pneumatique de véhicule, selon l'une quelconque des revendications précédentes, dans lequel la zone en forme de rainure (14) présente
- une largeur de rainure B_{R} (26) s'étendant radialement de 1,0 mm à 5,0 mm, et/ou
- une hauteur de rainure H_{R} (27) s'étendant perpendiculairement à la longueur de rainure (15) et à la largeur de rainure (26) de 0,2 mm à 2,0 mm.

5. Pneumatique de véhicule selon l'une quelconque des revendications précédentes, dans lequel l'entaille fine (12) présente une zone en forme de rainure (14) sous la forme d'une moulure semi-circulaire, parallélépipédique, triangulaire ou trapézoïdale,
l'entaille fine (12) présentant de préférence une zone en forme de rainure (14) sous la forme d'une moulure semi-circulaire, une section transversale de la zone en forme de rainure (14) sous la forme d'une moulure semi-circulaire étant un arc de cercle (16) ayant un rayon r et un angle au centre α, dans lequel
- le rayon r est compris dans la plage de 0,5 mm à 2,0 mm, et/ou
- l'angle α est compris dans la plage de 45° à 270°.

6. Pneumatique de véhicule selon l'une quelconque des revendications précédentes, dans lequel la zone en forme de rainure (14) s'étend à une hauteur comprise entre 20 % à 80 % de la profondeur d'entaille radiale maximale (17) de l'entaille fine (12).

7. Pneumatique de véhicule selon la revendication 1, dans lequel la direction de dimension principale (19b) de l'entaille fine (12) s'étend en parallèle à la direction circonférentielle (7) du pneumatique de véhicule (1), et les directions de dimensions secondaires (22, 23) de l'entaille fine (12) s'étendent axialement à partir de la dimension principale (18b) en direction d'une épaule de pneu (5a, 5b).

8. Pneumatique de véhicule selon la revendication 7, dans lequel la longueur L_{HES} de la dimension principale (18b) le long de la direction de dimension principale (19b) mesure de 10 % à 90 % de la longueur de dimension totale L_{GES} (13) de l'entaille fine (12), et/ou les deux dimensions secondaires (20, 21) sont de même longueur.

9. Pneumatique de véhicule selon l'une quelconque des revendications 1, 7 à 8, dans lequel la zone en forme de rainure (14) sous la forme d'une moulure
- s'étend sur la dimension principale (18b) et sur au moins une dimension secondaire (20, 21), et/ou
- est courbée vers la zone de bande de roulement centrale (9).

10. Pneumatique de véhicule selon l'une quelconque des revendications précédentes, dans lequel au moins une autre entaille fine (12) comme définie dans le préambule de la revendication 1 se trouve dans au moins un élément de bloc de sculpture central (10).
